# EUROPEAN PATENT APPLICATION

(11) **EP 4 678 404 A1**
(43) Date of publication of application: **14.01.2026**
(21) Application number: 24187300.9
(22) Date of filing: 09.07.2024
(51) Int. Cl.: B60B 1/04

(54) **SPOKE NIPPLE**

(71) Applicant: Powerway Industrial Co., Ltd., 358 Miaoli County (TW)
(72) Inventor: TSAI, CHIN-HSING, 358 Yuanli Township, Miaoli County (TW)
(74) Representative: Lang, Christian

(57) **Abstract**

A spoke nipple (1) is provided, wherein the spoke nipple (1) includes: a shaft body (10) configured to be connected to a spoke and a radial blocking projection (20) protruding radially from the shaft body (10), the shaft body (10) including a large diameter portion (11) and a small diameter section (12), the small diameter section (12) being connected between the large diameter portion (11) and the radial blocking projection (20), the large diameter portion (11) having a diametric dimension larger than a diametric dimension of the small diameter section (12) and smaller than a diametric dimension of the radial blocking projection (20), the shaft body (10) being configured to be disposed through a radial hole of a rim, the radial blocking projection (20) being blocked on a side of the rim.

## Description

### BACKGROUND OF THE INVENTION

### Field of the Invention

The present invention relates to a wheel component, particularly to a spoke nipple.

### Description of the Prior Art

The wheel rim primarily relies on the tensioning of a plurality of spokes between the two ends of the wheel axle and the rim, to maintain the wheel's robust and firm circular shape, allowing it to rotate and roll smoothly on the road. Therefore, to achieve a sturdy and reliable wheel rim, the key lies in whether the spokes are evenly tightened.

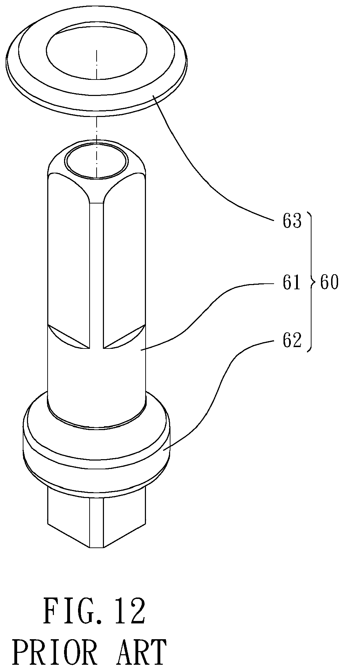

Generally, a spoke nipple (also known as a brass head) is used to firmly connect the spoke and the rim and can further adjust the tension of the spokes. As shown in Fig. 12, a conventional spoke nipple 60 includes a shaft body 61 for connecting the spoke and a radial blocking projection 62 protruding radially from the shaft body 61. A washer 63 is additionally fitted over the radial blocking projection 62. The shaft body 61 passes through a radial hole on the rim, and the radial blocking projection 62 is blocked on a side of the rim. However, the inner diameter of the washer 63 is larger than the outer diameter of the shaft body 61, making it easy for the washer 63 to fall off during the installation process, which causes significant inconvenience.

The present invention is, therefore, arisen to obviate or at least mitigate the above-mentioned disadvantages.

### SUMMARY OF THE INVENTION

The main object of the present invention is to provide a spoke nipple which can restrict a pad member and prevent it from falling off, and facilitate the installation process.

To achieve the above and other objects, a spoke nipple is provided, wherein the spoke nipple includes: a shaft body configured to be connected to a spoke and a radial blocking projection protruding radially from the shaft body, the shaft body including a large diameter portion and a small diameter section, the small diameter section being connected between the large diameter portion and the radial blocking projection, the large diameter portion having a diametric dimension larger than a diametric dimension of the small diameter section and smaller than a diametric dimension of the radial blocking projection, the shaft body being configured to be disposed through a radial hole of a rim, the radial blocking projection being blocked on a side of the rim.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective view of a first embodiment of the present invention;
Fig. 2 is an exploded view of the first embodiment of the present invention;
Fig. 3 is another exploded view of the first embodiment of the present invention;
Fig. 4 is a cross-sectional view of the first embodiment of the present invention;
Fig. 5 is a schematic view showing an application of the first embodiment of the present invention;
Fig. 6 is a perspective view of a second embodiment of the present invention;
Fig. 7 is an exploded view of the second embodiment of the present invention;
Figs. 7A and 7B are schematic views of another washer according to the second embodiment of the present invention;
Figs. 8 and 9 are schematic views showing combination of the second embodiment of the present invention;
Fig. 10 is a perspective view of a third embodiment of the present invention;
Fig. 11 is an exploded view of the third embodiment of the present invention; and
Fig. 12 is an exploded view of a conventional spoke nipple.

### DETAILED DESCRIPTION OF THE PREFERRED EMBODIMENTS

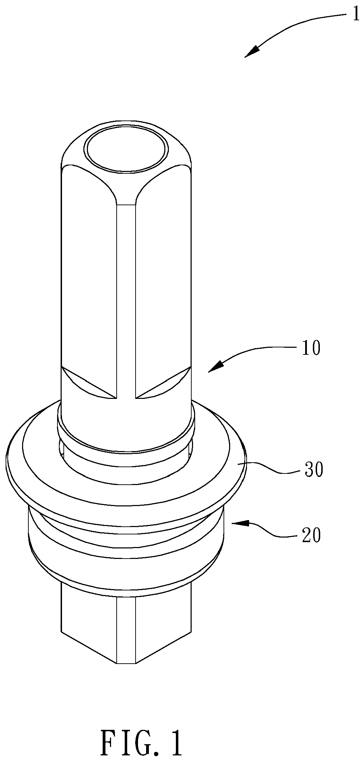

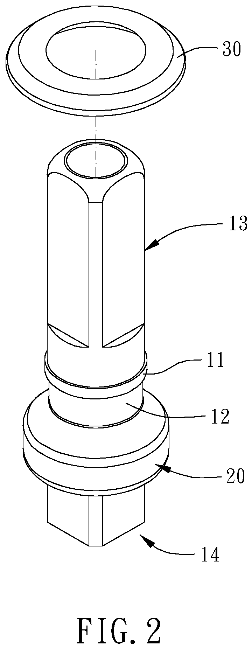

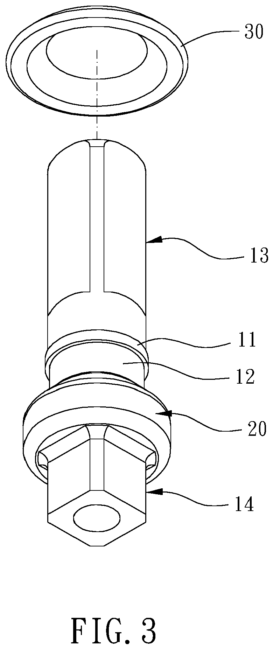

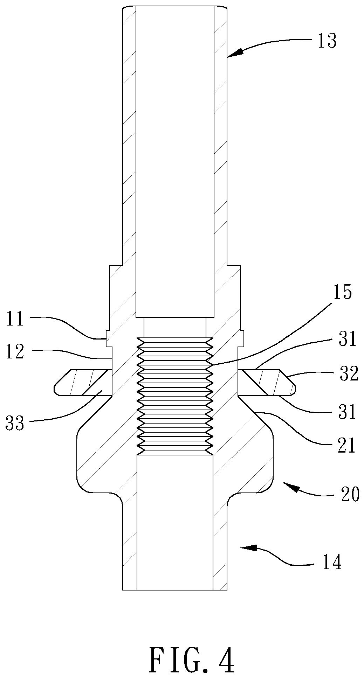

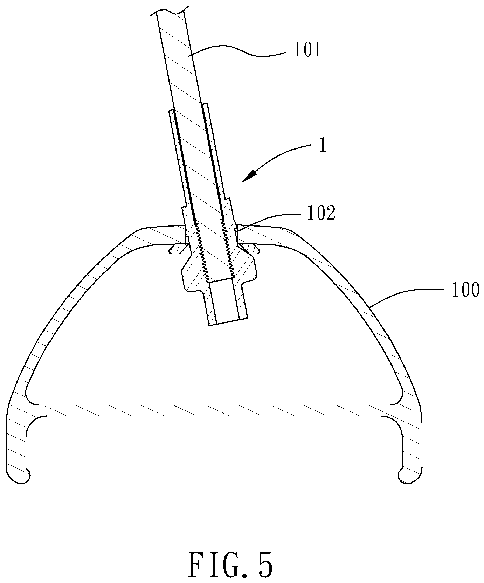

Please refer to Figs. 1 to 5 for a first exemplary embodiment of the present invention. A spoke nipple 1 of the present invention includes a shaft body 10 configured to be connected to a spoke 101 and a radial blocking projection 20 protruding radially from the shaft body 10. The shaft body 10 includes a large diameter portion 11 and a small diameter section 12, the small diameter section 12 is connected between the large diameter portion 11 and the radial blocking projection 20. The large diameter portion 11 has a diametric dimension larger than a diametric dimension of the small diameter section 12 and smaller than a diametric dimension of the radial blocking projection 20. The shaft body 10 is configured to be disposed through a radial hole 102 of the rim 100, and the radial blocking projection 20 is blocked on a side of the rim 100. This design can restrict a pad member (such as a washer) between the radial blocking projection 20 and the large diameter portion 11, preventing it from falling off easily and facilitating the installation process.

The shaft body 10 further includes a first end portion 13 and a second end portion 14. At least one of the first end portion 13 and the second end portion 14 includes a non-circular outer peripheral surface (such as a quadrilateral, hexagonal, or a shape which fits with a disassembly tool). The shaft body 10 further includes an inner threaded hole 15 configured to be screwed with the spoke 101. Preferably, both the first end portion 13 and the second end portion 14 each include a non-circular outer peripheral surface, allowing the spoke nipple 1 and the spoke 101 to be tightened, loosened, and adjusted for spoke tension from either side of the rim 100. In this embodiment, the large diameter portion 11 is annularly disposed on the shaft body 10. In other embodiments, the large diameter portion 11 may include at least one boss or bump on the shaft body 10. This at least one boss or bump may be a single one boss or bump or multiple spaced bosses or bumps. The spoke nipple 1 further includes a washer 30. The washer 30 has an inner diametric dimension smaller than or equal to the diametric dimension of the large diameter portion 11 and larger than the diametric dimension of the small diameter section 12, and the washer 30 is located between the radial blocking projection 20 and the large diameter portion 11. When force is applied to the washer 30, the inner edge of the washer 30 can be forced to move over the large diameter portion 11. Since the inner diameter of the washer 30 is smaller than or equal to the diametric dimension of the large diameter portion 11, the washer 30 can be effectively restricted between the radial blocking projection 20 and the large diameter portion 11.

Specifically, the radial blocking projection 20 includes an annular surface 21 which is tapered towards the large diameter portion 11. When the spoke is tightened, the annular surface 21 can automatically guide and balance the tension, preventing the spoke from bending or deforming due to lateral forces. The washer 30 includes two side surfaces 31, an inclined surface 32 connected to and between the two side surfaces 31, and a conical hole 33 disposed through the two side surfaces 31 and tapered towards the large diameter portion 11. The hole wall of the conical hole 33 faces the annular surface 21. When the spoke is tightened, the hole wall of the conical hole 33 can automatically guide and balance the tension relative to the annular surface 21, preventing the spoke from bending or deforming due to lateral forces.

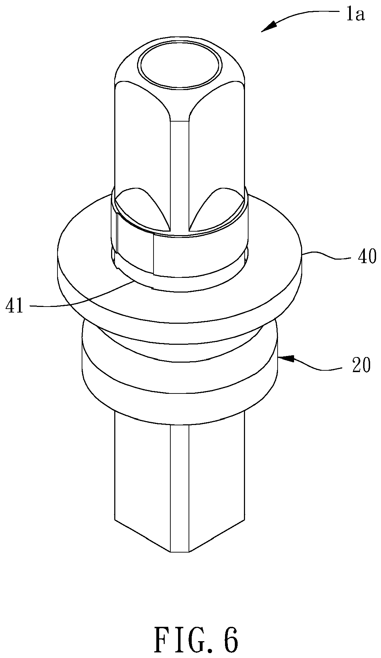

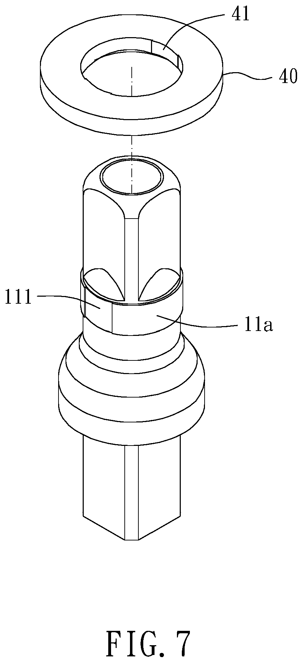

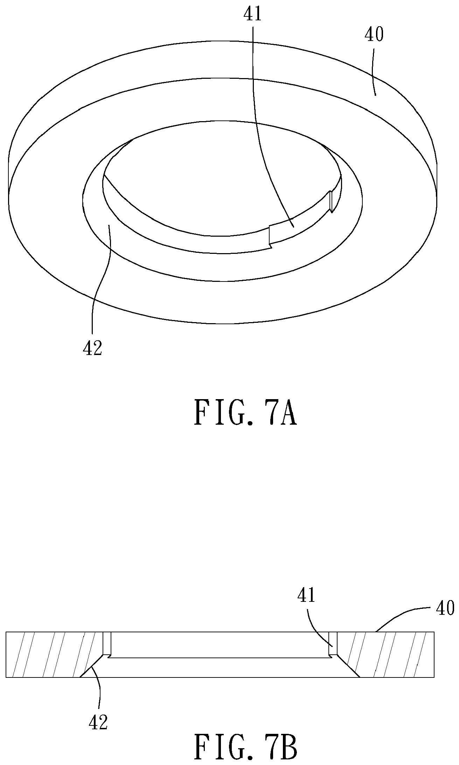

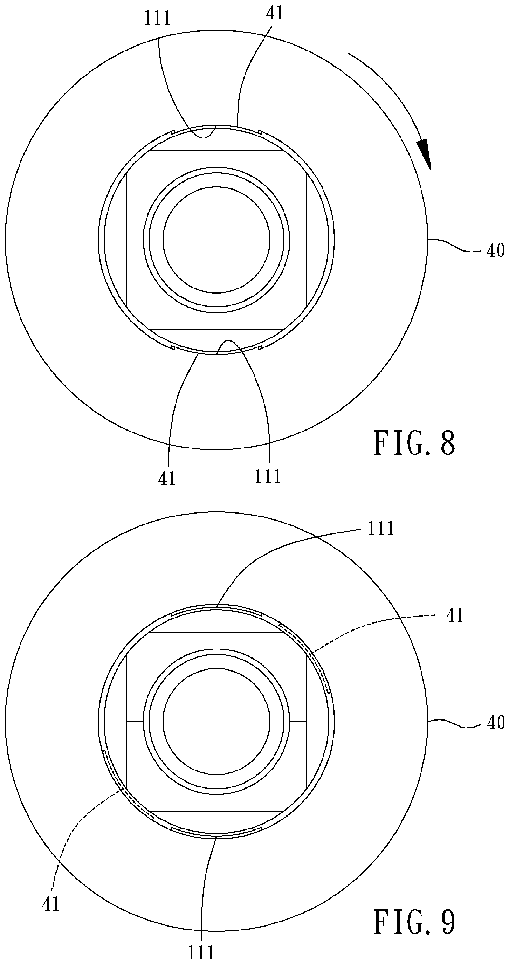

In the second embodiment shown in Figs. 6 to 9, the large diameter portion 11a includes at least one groove 111 (e.g., two grooves 111 arranged radially opposite each other, or more grooves 111). The spoke nipple 1a further includes a washer 40. The inner peripheral surface of the washer 40 includes at least one blocking protrusion 41 (e.g., two blocking protrusions 41 arranged radially opposite each other, or more blocking protrusions 41). The at least one blocking protrusion 41 passes through the at least one groove 111 and is located between the radial blocking projection 20 and the large diameter portion 11a. Thus, the washer 40 can be effectively restricted between the radial blocking projection 20 and the large diameter portion 11a. The washer 40 may be similar to the washer 30 in the first embodiment, for example, the inner peripheral surface of the washer 40 may include a conical hole 42 (as shown in Figs. 7A and 7B).

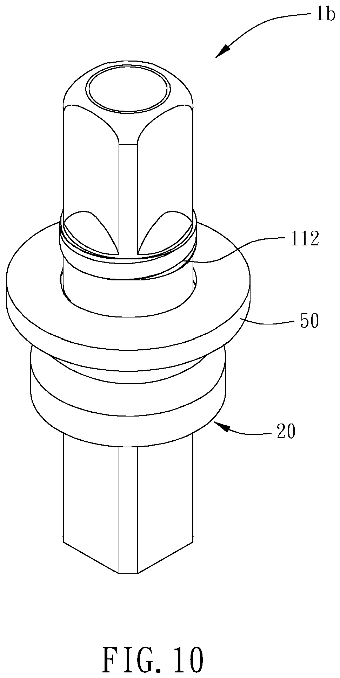

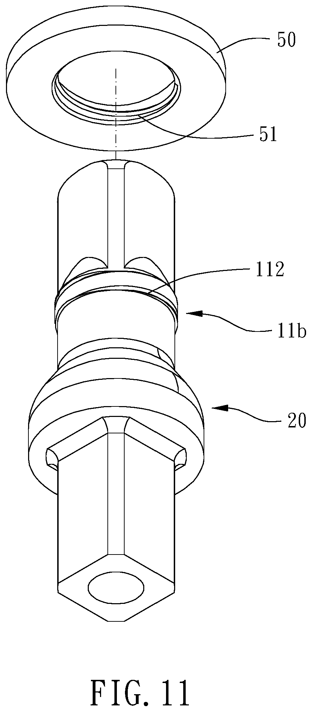

In the third embodiment shown in Figs. 10 to 11, the large diameter portion 11b includes at least one first radial projection 112. The spoke nipple 1b further includes a washer 50. The inner peripheral surface of the washer 50 includes at least one second radial projection 51. At least one of the at least one first radial projection 112 and the at least one second radial projection 51 extends spirally. In this embodiment, the at least one first radial projection 112 and the at least one second radial projection 51 are threads extending circumferentially and spirally, respectively. The inner diameter of the washer 50 has an inner diametric dimension smaller than the diametric dimension of the large diameter portion 11b at the at least one first radial projection 112. The washer 50 is rotatable relative to the at least one first radial projection 112 to move to be located between the radial blocking projection 20 and the large diameter portion 11b. As such, the washer 50 can be effectively restricted between the radial blocking projection 20 and the large diameter portion 11b.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A spoke nipple (1) including a shaft body (10) configured to be connected to a spoke (101) and a radial blocking projection (20) protruding radially from the shaft body (10), the shaft body (10) including a large diameter portion (11) and a small diameter section (12), the small diameter section (12) being connected between the large diameter portion (11) and the radial blocking projection (20), the large diameter portion (11) having a diametric dimension larger than a diametric dimension of the small diameter section (12) and smaller than a diametric dimension of the radial blocking projection (20), the shaft body (10) being configured to be disposed through a radial hole (102) of a rim (100), the radial blocking projection (20) being blocked on a side of the rim (100).

2. The spoke nipple (1) of claim 1, wherein the shaft body (10) further includes a first end portion (13) and a second end portion (14), at least one of the first end portion (13) and the second end portion (14) includes a non-circular outer peripheral surface, and the shaft body (10) further includes an inner threaded hole (15) configured to be screwed with the spoke (101).

3. The spoke nipple (1) of claim 1, wherein the large diameter portion (11) is annularly disposed on the shaft body (10).

4. The spoke nipple (1) of claim 3, further including a washer (30, 40, 50), wherein the washer (30, 40, 50) has an inner diametric dimension smaller than or equal to the diametric dimension of the large diameter portion (11) and larger than the diametric dimension of the small diameter section (12), and the washer (30, 40, 50) is located between the radial blocking projection (20) and the large diameter portion (11).

5. The spoke nipple (1) of claim 1, wherein the large diameter portion (11) includes at least one groove (111).

6. The spoke nipple (1) of claim 5, further including a washer (30, 40, 50), wherein an inner peripheral surface of the washer (30, 40, 50) of the washer (30, 40, 50) includes at least one blocking protrusion (41), and the at least one blocking protrusion (41) passes through the at least one groove (111) and is located between the radial blocking projection (20) and the large diameter portion (11).

7. The spoke nipple (1) of claim 1, wherein the large diameter portion (11) includes at least one first radial projection (112).

8. The spoke nipple (1) of claim 7, further including a washer (30, 40, 50), wherein an inner peripheral surface of the washer (30, 40, 50) includes at least one second radial projection (51), at least one of the at least one first radial projection (112) and the at least one second radial projection (51) extends spirally, the washer (30, 40, 50) has an inner diametric dimension smaller than the diametric dimension of a portion of the large diameter portion (11) at the at least one first radial projection (112), the washer (30, 40, 50) is rotatable relative to the at least one first radial projection (112) to move to be located between the radial blocking projection (20) and the large diameter portion (11).

9. The spoke nipple (1) of claim 8, wherein the at least one first radial projection (112) and the at least one second radial projection (51) are threads extending circumferentially and spirally, respectively.

10. The spoke nipple (1) of claim 4, wherein the radial blocking projection (20) includes an annular surface (21) which is tapered towards the large diameter portion (11); the shaft body (10) further includes a first end portion (13) and a second end portion (14), at least one of the first end portion (13) and the second end portion (14) includes a non-circular outer peripheral surface; the washer (30, 40, 50) includes two side surfaces (31), an inclined surface (32) connected to and between the two side surfaces (31), and a conical hole (33) disposed through the two side surfaces (31) and tapered towards the large diameter portion (11), and a hole wall of the conical hole (33) faces the annular surface (21).

## Amended claims

### Amended claims in accordance with Rule 137(2) EPC.

1. A spoke nipple (1) including a shaft body (10) configured to be connected to a spoke (101) and a radial blocking projection (20) protruding radially from the shaft body (10), the shaft body (10) including a large diameter portion (11) and a small diameter section (12), wherein the large diameter portion (11) is annularly disposed on the shaft body (10), the small diameter section (12) being connected between the large diameter portion (11) and the radial blocking projection (20), the large diameter portion (11) having a diametric dimension larger than a diametric dimension of the small diameter section (12) and smaller than a diametric dimension of the radial blocking projection (20), the shaft body (10) being configured to be disposed through a radial hole (102) of a rim (100), the radial blocking projection (20) being blocked on a side of the rim (100), **characterized in that** the spoke nipple (1) further includes a washer (30, 40, 50), and the washer (30, 40, 50) has an inner diametric dimension smaller than or equal to the diametric dimension of the large diameter portion (11) and larger than the diametric dimension of the small diameter section (12) so that, when force is applied to the washer (30), the inner edge of the washer (30) can be forced to move over the large diameter portion (11), and **in that** the washer (30, 40, 50) is located between the radial blocking projection (20) and the large diameter portion (11).

2. The spoke nipple (1) of claim 1, wherein the shaft body (10) further includes a first end portion (13) and a second end portion (14), at least one of the first end portion (13) and the second end portion (14) includes a non-circular outer peripheral surface, and the shaft body (10) further includes an inner threaded hole (15) configured to be screwed with the spoke (101).

3. The spoke nipple (1) of claim 1, wherein the large diameter portion (11) includes at least one groove (111).

4. The spoke nipple (1) of claim 3, wherein an inner peripheral surface of the washer (30, 40, 50) includes at least one blocking protrusion (41), and the at least one blocking protrusion (41) passes through the at least one groove (111) and is located between the radial blocking projection (20) and the large diameter portion (11).

5. The spoke nipple (1) of claim 1, wherein the large diameter portion (11) includes at least one first radial projection (112).

6. The spoke nipple (1) of claim 5, wherein an the inner peripheral surface of the washer (30, 40, 50) includes at least one second radial projection (51), at least one of the at least one first radial projection (112) and the at least one second radial projection (51) extends spirally, the inner diametric dimension of the washer (30, 40, 50) is smaller than the diametric dimension of a portion of the large diameter portion (11) at the at least one first radial projection (112), the washer (30, 40, 50) is rotatable relative to the at least one first radial projection (112) to move to be located between the radial blocking projection (20) and the large diameter portion (11).

7. The spoke nipple (1) of claim 6, wherein the at least one first radial projection (112) and the at least one second radial projection (51) are threads extending circumferentially and spirally, respectively.

8. The spoke nipple (1) of claim **1,** wherein the radial blocking projection (20) includes an annular surface (21) which is tapered towards the large diameter portion (11); the shaft body (10) further includes a first end portion (13) and a second end portion (14), at least one of the first end portion (13) and the second end portion (14) includes a non-circular outer peripheral surface; the washer (30, 40, 50) includes two side surfaces (31), an inclined surface (32) connected to and between the two side surfaces (31), and a conical hole (33) disposed through the two side surfaces (31) and tapered towards the large diameter portion **(11),** and a hole wall of the conical hole (33) faces the annular surface (21).
